(19) Europäisches Patentamt
European Patent Office
Office européen des brevets

(11) **EP 1 884 957 A1**

(12) **EUROPEAN PATENT APPLICATION**
published in accordance with Art. 153(4) EPC

(43) Date of publication:
**06.02.2008 Bulletin 2008/06**

(51) Int Cl.:
***G21C 3/28*** *(2006.01)*          ***G21C 3/328*** *(2006.01)*

(21) Application number: **06714017.8**

(22) Date of filing: **17.02.2006**

(86) International application number:
**PCT/JP2006/302876**

(87) International publication number:
**WO 2006/092970 (08.09.2006 Gazette 2006/36)**

(84) Designated Contracting States:
**DE FR GB**

(30) Priority: **28.02.2005 JP 2005052759**

(71) Applicant: **Mitsubishi Heavy Industries, Ltd.
Minato-ku
Tokyo 108-8215 (JP)**

(72) Inventors:
• **HAMASAKI, Manabu
c/o Mitsubishi Heavy Industries, LTD
Tokyo, 108-8215 (JP)**

• **HOSHI, Masaya
c/o Mitsubishi Heavy Industries, LTD
Tokyo, 108-8215 (JP)**

• **TABUCHI, Shiro
c/o Kobe Shipyard & Machinery Works,
Kobe, Hyogo-ken 652-8585 (JP)**

(74) Representative: **Intes, Didier Gérard André et al
Cabinet Beau de Loménie
158, rue de l'Université
75340 Paris Cedex 07 (FR)**

(54) **FUEL BUNDLE FOR PRESSURIZED-WATER REACTOR AND METHOD OF DESIGNING FUEL BUNDLE**

(57)     In a fuel assembly for a pressurized water reactor and a method of designing the fuel assembly, fuel pellets made from a sintered uranium oxide are put into a zirconium metal alloy fuel cladding tube and form a fuel rod. The fuel rods are bundled together in a matrix form to form the fuel assembly. When an outer diameter of the fuel pellet increases, a weight of uranium loaded in the fuel assembly is increased. An amount of increase in reactivity caused by the decrease in burnup brought about by the increase in uranium weight exceeds an amount of decrease in reactivity caused by an insufficient moderation due to decrease in a moderator in a region A. The diameter of the fuel pellet is determined so as to fall within the region A where the increase in reactivity exceeds.

FIG.11

## Description

### TECHNICAL FIELD

The present invention relates to a fuel assembly of a pressurized water reactor (PWR) and a method of designing the fuel assembly, and more particularly to an improvement in reactivity of the PWR by a fuel pellet with an increased diameter.

### BACKGROUND ART

In a PWR, light water is employed as a reactor coolant and neutron moderator in a state of high-temperature and high-pressure so as not to achieve boiling over an entire reactor core. The high-temperature high-pressure light water flows into a steam generator where the water becomes steam through heat exchange. Then the steam is transported into a turbine generator for power generation.

The PWR is provided with a reactor vessel which houses a predetermined number of fuel assemblies, each of which includes plural fuel rods and a predetermined number of control rods placed between the fuel rods. The fuel rods and the control rods are arranged in a matrix. The fuel assembly consists of, for example, 264 fuel rods bundled together in a $17 \times 17$ square matrix form, one guide thimble for instrumentation, and 24 control rod guide thimbles.

The fuel rod is a sealed Zircoloy cladding tube which houses sintered pellets of low-enriched uranium dioxide ($UO_2$) and is filled with helium under pressure.

The life of the reactor core of the nuclear reactor is estimated based on burnup characteristics of the fuel rods, and various proposals have been made to provide a high performance fuel rod to achieve a higher fuel burnup. For example, according to a technique disclosed in Patent Document 1, plural pellets of uranium dioxide are stacked inside a cladding tube, which is then sealed by an upper end cap and a lower end cap. A void space provided inside the lower end cap communicates with the inside of the cladding tube to increase a volume of a gas space, whereby an operation with a higher fuel burnup is allowed.

Patent Document 1 Japanese Patent Application Laid-Open No. H11-142560

### DISCLOSURE OF INVENTION

### PROBLEM TO BE SOLVED BY THE INVENTION

The burnup of the fuel assembly depends on the performance of the fuel rod. A weight of the fuel to be loaded is determined based on a thermal output of the reactor core, an operation period, and a highest level of burnup. Based on the determined weight of the fuel, the number, the length, and the diameter of the fuel rod (i.e., diameter of pellet) are determined. The fuel rod pitch is determined based on a relation between the ratio of uranium to the light water and the fuel economy. Here, though the diameter of the pellet is determined according to the moderating ratios, which depend on the ratio of the uranium to the light water, improvements in fuel economy and in the fuel reactivity are always desired.

The present invention is achieved to solve the problems as described above, and an object of the present invention is to provide the fuel assembly which can prolong the life of the pressurized water reactor by optimizing the diameter of the fuel pellet and thereby enhancing the reactivity, and to provide a method of designing such a fuel assembly for the pressurized water reactor.

### MEANS FOR SOLVING PROBLEM

To achieve an object as described above, a fuel assembly for a pressurized water reactor according to the present invention as recited in claim 1 is formed from plural fuel rods bundled together in a matrix form, each fuel rod includes fuel pellets made from sintered uranium oxide put into a zirconium metal alloy cladding tube, and an outer diameter of the fuel pellet is determined so as to fall within a diameter-increase gain region that is a region in which an amount of increase in reactivity caused by a decrease in burnup due to an increase in a weight of the uranium exceeds an amount of decrease in reactivity caused by an insufficient moderation due to a decrease in a moderator when the outer diameter of the fuel pellet is increased and whereby the weight of the uranium loaded in the fuel assembly is increased.

Further, in the fuel assembly for the pressurized water reactor according to the present invention as recited in claim 2, the diameter-increase gain region where the reactivity exceeds is a region in which even if a batch burnup is decreased due to the increase in the outer diameter of the fuel pellet, an amount of decrease in a cycle burnup exceeds a relative amount of decrease in the batch burnup.

Still further, the fuel assembly for the pressurized water reactor according to the present invention as recited in claim 3 is formed from plural fuel rods bundled together in a matrix form, each fuel rod includes fuel pellets made from sintered uranium oxide put into a zirconium metal alloy cladding tube, and the plural fuel rods are arranged in a $17 \times 17$ square matrix with a fuel rod pitch of 12.6 mm and the outer diameter of the fuel pellet is set within a range of $8.25 <$ outer diameter of the fuel pellet $\leq 8.62$ mm.

Still further, the fuel assembly for the pressurized water reactor according to the present invention as recited in claim 4 is formed from plural fuel rods bundled together in a matrix form, each fuel rod includes fuel pellets made from sintered uranium oxide put into a zirconium metal alloy cladding tube, and the plural fuel rods are arranged in a $15 \times 15$ square matrix with a fuel rod pitch of 14.3 mm and the outer diameter of the fuel pellet is set within a range of 9.35 < outer diameter of the fuel pellet ≤ 10.11 mm.

Still further the fuel assembly for the pressurized water reactor according to the present invention as recited in claim 5 is formed from plural fuel rods bundled together in a matrix form, each fuel rod includes fuel pellets made from sintered uranium oxide put into a zirconium metal alloy cladding tube, and the plural fuel rods are arranged in a 14 × 14 square matrix with a fuel rod pitch of 14.1 mm and the outer diameter of the fuel pellet is set within a range of 9.35 < outer diameter of the fuel pellet ≤ 9.64 mm.

Still further, in a method of designing the fuel assembly according to the present invention as recited in claim 6, the fuel assembly is formed from plural fuel rods bundled together in a matrix form, each fuel rod including fuel pellets made from sintered uranium oxide put into a zirconium metal alloy cladding tube, and an outer diameter of the fuel pellet is determined so as to fall within a diameter-increase gain region that is a region in which an amount of increase in reactivity caused by a decrease in burnup due to an increase in a weight of the uranium exceeds an amount of decrease in reactivity caused by an insufficient moderation due to a decrease in a moderator when the outer diameter of the fuel pellet is increased and whereby the weight of the uranium loaded in the fuel assembly is increased.

Still further, in the method of designing the fuel assembly according to the present invention as recited in claim 7, the diameter-increase gain region where the reactivity exceeds is a region in which even if a batch burnup is decreased due to the increase in the outer diameter of the fuel pellet, an amount of decrease in a cycle burnup exceeds a relative amount of decrease in the batch burnup.

EFFECT OF THE INVENTION

In the fuel assembly for the pressurized water reactor according to the present invention as recited in claim 1, the plural fuel rods are bundled together in the matrix form, and each fuel rod includes fuel pellets made from sintered uranium oxide put into the zirconium metal alloy cladding tube. When the outer diameter of the fuel pellet is increased, the weight of the uranium loaded in the fuel assembly is increased. The outer diameter of the fuel pellet is determined so as to fall within the diameter-increase gain region that is the region in which the amount of increase in reactivity caused by the decrease in burnup due to the increase in the weight of the uranium exceeds the amount of decrease in reactivity caused by an insufficient moderation due to the decrease in the moderator. The increase in the outer diameter of the fuel pellet causes the degradation in moderation due to the decrease in the amount of the moderator, thereby causing the decrease in reactivity. On the other hand, however, the increase in the amount of loaded uranium causes the decrease in burnup, thereby increasing the reactivity.

When the relation between these two variations in reactivity is considered, it can be found that in a certain region the amount of increase in reactivity by the increase in uranium weight exceeds the amount of decrease in reactivity due to the insufficient moderation by the decrease in the amount of moderator. When the outer diameter of the fuel pellet is set so as to fall within this region, the diameter of the fuel pellet is optimized so as to cause the increase in reactivity, and which further leads to the extension of the life of the reactor core.

In the fuel assembly for the pressurized water reactor according to the present invention as recited in claim 2, the diameter-increase gain region where the reactivity exceeds is a region in which even if a batch burnup is decreased due to the increase in the outer diameter of the fuel pellet, an amount of decrease in a cycle burnup exceeds a relative amount of decrease in the batch burnup. Thus, the region in which the amount of decrease in the cycle burnup exceeds the amount of decrease in the batch burnup caused by the increase in the diameter of the fuel pellet is a region where the number of the fuel rods to be replaced is decreased, whereby the economic efficiency can be enhanced.

In the fuel assembly for the pressurized water reactor according to the present invention as recited in claim 3, the plural fuel rods are bundled together in the matrix form, and each fuel rod includes fuel pellets made from sintered uranium oxide put into a zirconium metal alloy cladding tube. When the plural fuel rods are arranged in a 17 × 17 square matrix with a fuel rod pitch of 12.6 mm, the outer diameter of the fuel pellet is set larger than 8.25 mm and equal to or smaller than 8.62 mm. Thus, in the 17 × 17 fuel assembly, the diameter of the fuel pellet is optimized and the reactivity can be increased.

In the fuel assembly for the pressurized water reactor according to the present invention as recited in claim 4, the plural fuel rods are bundled together in the matrix form, and each fuel rod includes fuel pellets made from sintered uranium oxide put into the zirconium metal alloy cladding tube. When the plural fuel rods are arranged in the 15 × 15 square matrix with a fuel rod pitch of 14.3 mm, the outer diameter of the fuel pellet is set larger than 9.35 mm and equal to or smaller than 10.11 mm. Thus, in the 15 × 15 fuel assembly, the diameter of the fuel pellet is optimized and the reactivity can be increased.

In the fuel assembly for the pressurized water reactor according to the present invention as recited in claim 5, the plural fuel rods are bundled together in the matrix form, and each fuel rod includes fuel pellets made from sintered uranium oxide put into the zirconium metal alloy cladding tube. When the plural fuel rods are arranged in the 14 × 14 square matrix with the fuel rod pitch of 14.1 mm, the outer diameter of the fuel pellet is set larger than 9.35 mm and equal to or smaller than 9.64 mm. Thus, in the 14 × 14 fuel assembly, the diameter of the fuel pellet is optimized and the reactivity can be increased.

In a method of designing the fuel assembly according to the present invention as recited in claim 6, the fuel assembly is formed from the plural fuel rods bundled together in the matrix form, and each fuel rod includes fuel pellets made from sintered uranium oxide put into the zirconium metal alloy cladding tube. The outer diameter of the fuel pellet is determined so as to fall within the diameter-increase gain region that is a region in which the amount of increase in reactivity caused by the decrease in burnup due to the increase in the weight of the uranium exceeds the amount of decrease in reactivity caused by the insufficient moderation due to the decrease in the moderator when the outer diameter of the fuel pellet is increased and whereby the weight of the uranium loaded in the fuel assembly is increased. When the outer diameter of the fuel pellet is increased, on the one hand, the amount of the moderator is decreased so as to cause the decrease in reactivity. On the other hand, however, the weight of loaded uranium is increased so as to cause the decrease in burnup and thereby the increase in reactivity. When the relation between these two variations is considered, it can be found that in a certain region the amount of increase in reactivity caused by the increase in the outer diameter of the fuel pellet, i.e., the increase in the uranium weight, exceeds the amount of decrease in reactivity caused by the insufficient moderation due to the decrease in the moderator. Since the outer diameter of the fuel pellet is set so as to fall within this region, the diameter of the fuel pellet is optimized and the reactivity is increased, whereby the life of the reactor core can be prolonged.

In the method of designing the fuel assembly according to the present invention as recited in claim 7, the diameter-increase gain region where the reactivity exceeds is a region in which even if the batch burnup is decreased due to the increase in the outer diameter of the fuel pellet, the amount of decrease in the cycle burnup exceeds the relative amount of decrease in the batch burnup. Thus, the region where the amount of decrease in the cycle burnup exceeds the amount of decrease in the batch burnup caused by the increase in the diameter of the fuel pellet is a region where the number of fuel rods to be replaced is decreased, whereby the economic efficiency can be improved.

BRIEF DESCRIPTION OF DRAWINGS

FIG. 1 is a schematic diagram of a structure of a power generation plant with a pressurized water reactor according to a first embodiment of the present invention;
FIG. 2 is a schematic view of an internal structure of the pressurized water reactor according to the first embodiment;

FIG. 3 is a schematic diagram of a structure of a reactor core of the pressurized water reactor.
FIG. 4 is a schematic view of a structure of a fuel assembly in the pressurized water reactor according to the first embodiment;
FIG. 5 is a schematic sectional View showing an arrangement of fuel assembly in the pressurized water reactor according to the first embodiment;
FIG. 6 is a partial sectional view of a fuel rod in the fuel assembly of the pressurized water reactor according to the first embodiment;
FIG. 7 is a detailed sectional view of a main portion of the fuel rod in the fuel assembly of the pressurized water reactor according to the first embodiment;
FIG. 8 shows a relation between neutron multiplication factor and burnup of a 17 × 17 fuel assembly;
FIG. 9 shows a relation between neutron multiplication factor and diameter of the fuel pellet;
FIG. 10 shows rates of decrease in cycle burnup and batch burnup with respect to the diameter of the fuel pellet;
FIG. 11 shows an optimal range of the diameter of the fuel pellet;
FIG. 12 shows a relation between neutron multiplication factor and burnup of a 15 × 15 fuel assembly in a pressurized water reactor according to a second embodiment;
FIG. 13 shows a relation between the diameter of the fuel pellet and neutron multiplication factor;
FIG. 14 shows an optimal range of the diameter of the fuel pellet.
FIG. 15 shows a relation between burnup of a 14 × 14 fuel assembly and the neutron multiplication factor in a pressurized water reactor according to a third embodiment of the present invention;
FIG. 16 shows a relation between the diameter of the fuel pellet and the neutron multiplication factor; and
FIG. 17 shows an optimal range of the diameter of the fuel pellet.

EXPLANATIONS OF LETTERS OR NUMERALS

| 12 | pressurized water reactor (PWR) |
|---|---|
| 31 | reactor vessel |
| 39 | reactor core |
| 40 | fuel assembly |
| 45 | control rod drive mechanism |
| 47 | control rod (control rod cluster) |
| 49 | instrumentation guide thimble |
| 51 | fuel rod |
| 55 | control rod guide tube |
| 56 | instrumentation guide thimble |
| 61 | fuel rod |
| 62 | fuel cladding tube |
| $D_p$ | fuel pellet diameter |

$D_r$   fuel cladding tube outer diameter

BEST MODE(S) FOR CARRYING OUT THE INVENTION

Preferred embodiments of a pressurized water reactor and a fuel assembly for the pressurized water reactor according to the present invention will be described in detail below with reference to the accompanying drawings. It should be noted that the present invention is not limited by the embodiments.

First Embodiment

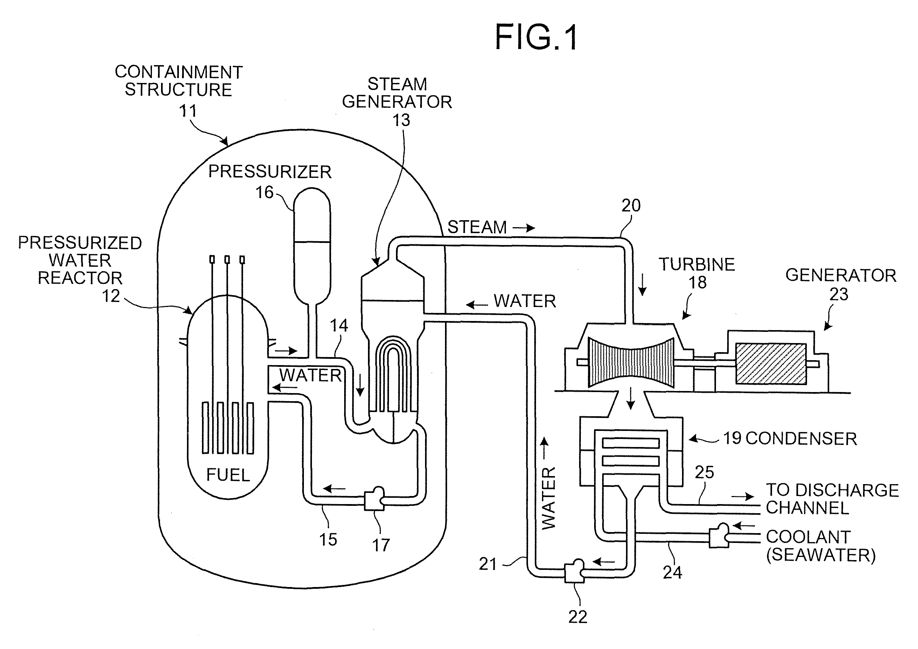

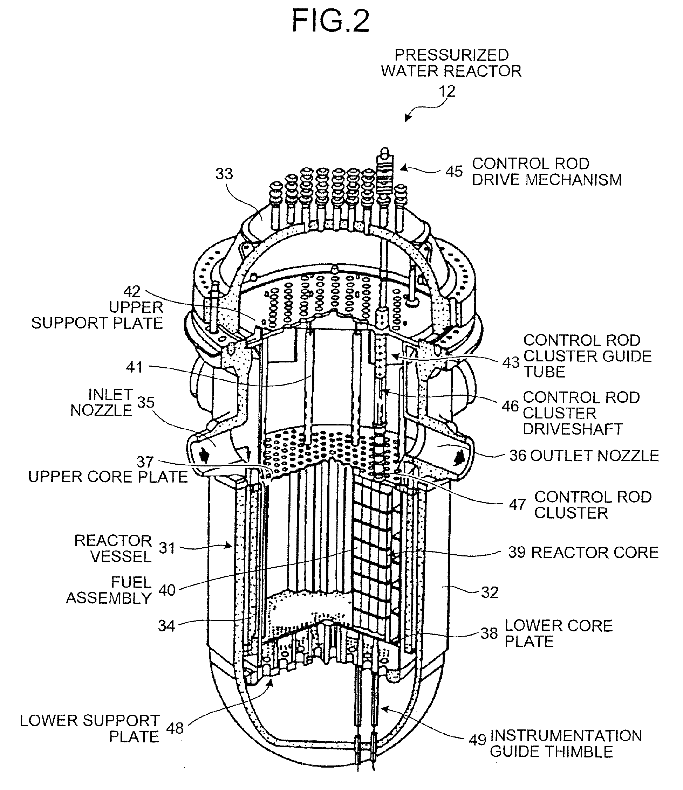

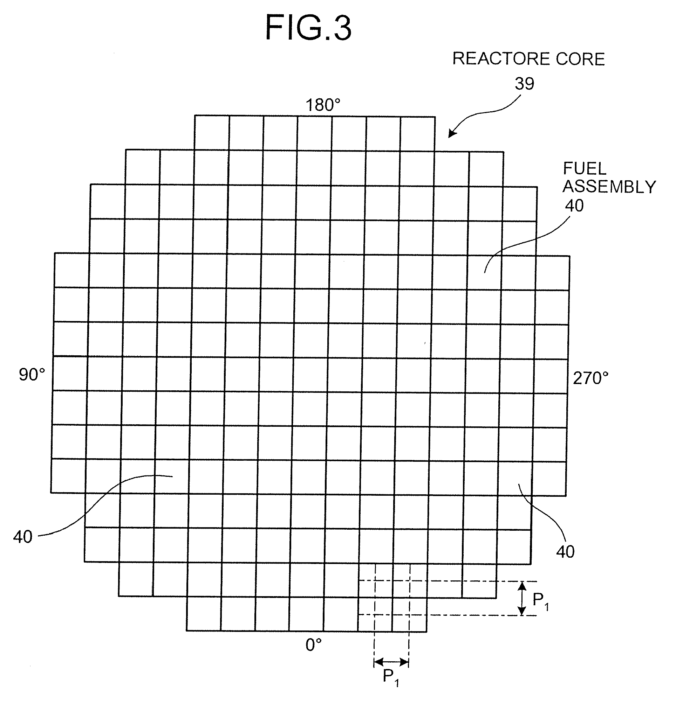

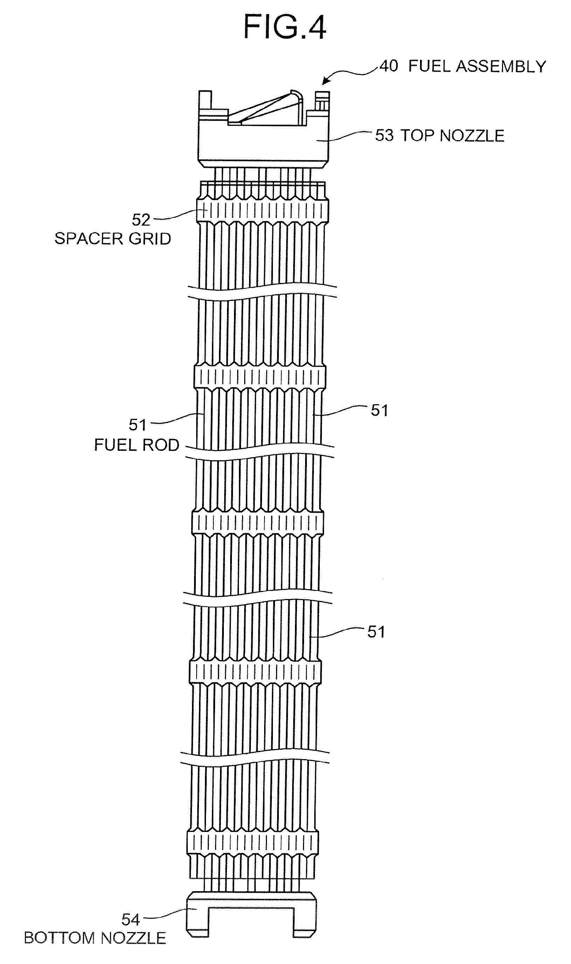

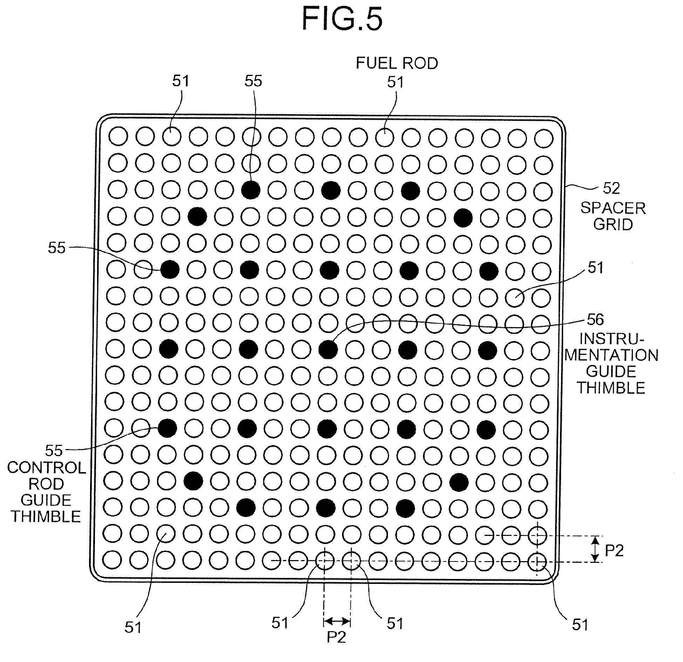

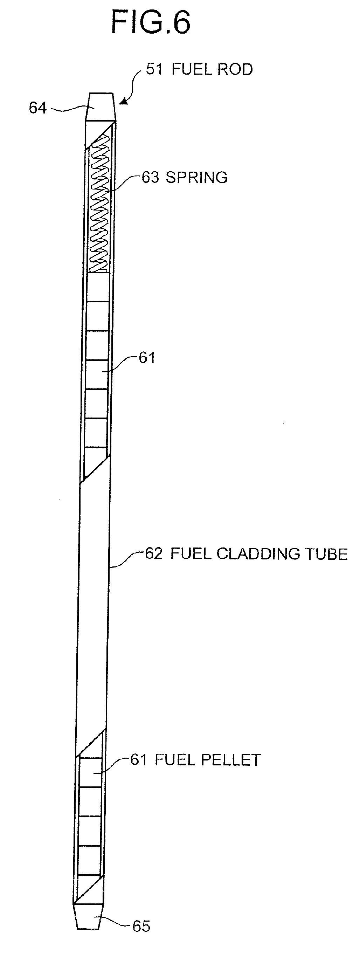

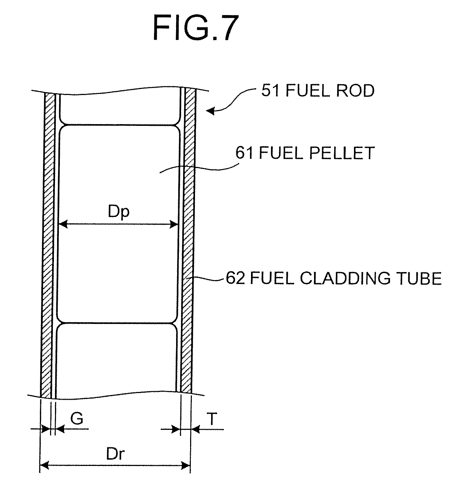

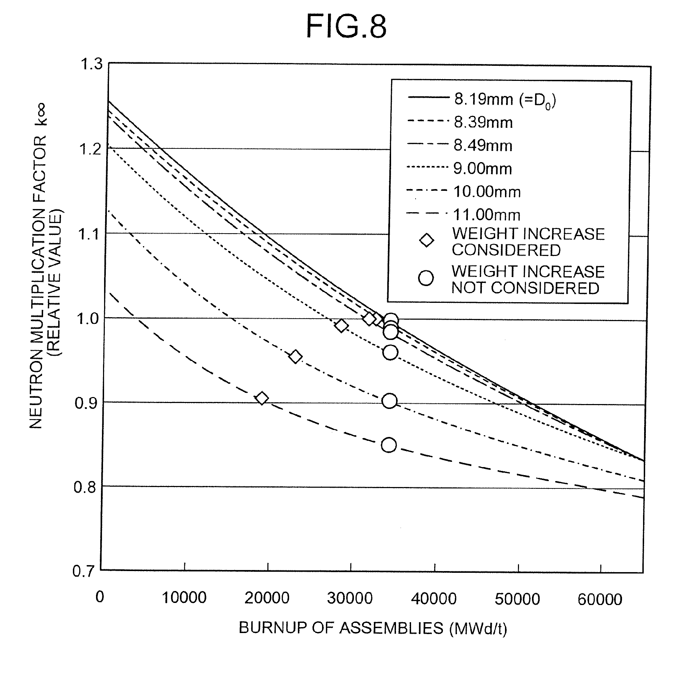

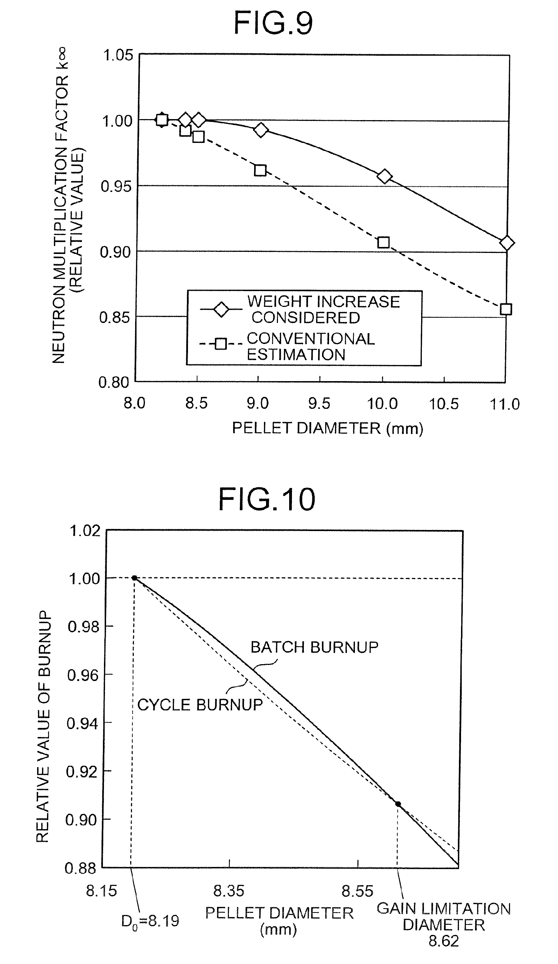

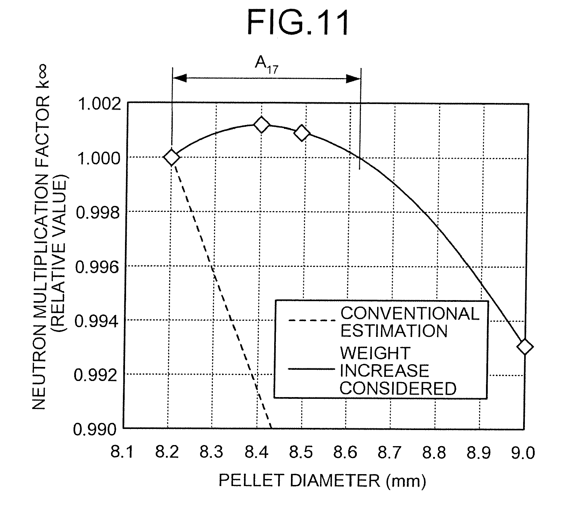

FIG. 1 is a schematic diagram of a structure of a power generation plant with a pressurized water reactor according to a first embodiment of the present invention; FIG. 2 is a schematic view of an internal structure of the pressurized water reactor according to the first embodiment; FIG. 3 is a schematic diagram of a structure of a reactor core of the pressurized water reactor; FIG. 4 is a schematic view of a structure of a fuel assembly in the pressurized water reactor according to the first embodiment; FIG. 5 is a schematic sectional view showing an arrangement of fuel assembly in the pressurized water reactor according to the first embodiment; FIG. 6 is a partial sectional view of a fuel rod in the fuel assembly of the pressurized water reactor according to the first embodiment; FIG. 7 is a detailed sectional view of a main portion of the fuel rod in the fuel assembly of the pressurized water reactor according to the first embodiment; FIG. 8 shows a relation between neutron multiplication factor and burnup of a $17 \times 17$ fuel assembly; FIG. 9 shows a relation between neutron multiplication factor and diameter of the fuel pellet; FIG. 10 shows rates of decrease in cycle burnup and batch burnup with respect to the diameter of the fuel pellet; and FIG. 11 shows an optimal range of the diameter of the fuel pellet.

A nuclear reactor according to the first embodiment is a pressurized water reactor (PWR) which employs light water as a reactor coolant and neutron moderator. The light water is employed in a state of high-temperature high-pressure water which does not achieve boiling over an entire reactor core. The high-temperature high-pressure water flows into a steam generator where the water becomes steam through heat exchange. Then the steam is transported into a turbine generator for power generation.

The power generation plant provided with the pressurized water reactor includes, as shown in FIG. 1, a containment structure 11, which houses a pressurized water reactor 12 and a steam generator 13. The pressurized water reactor 12 and the steam generator 13 are coupled with each other via coolant lines 14 and 15. The coolant line 14 is provided with a pressurizer 16, whereas the coolant line 15 is provided with a cooling water pump 17. Here, the light water is employed as a moderator and primary coolant. A primary coolant loop is pressurized by the pressurizer 16 which applies high pressure of approximately 150 to 160 barometric pressures in order to suppress the boiling of the primary coolant in the reactor core. The light water which serves as the primary coolant is heated by fuel such as a low-enriched uranium or MOX in the pressurized water reactor 12, and the resulting high-temperature light water is transmitted to the steam generator through the coolant line 14 while being maintained at a highly pressurized state of a predetermined level. In the steam generator 13, the heat passes from the high-pressure high-temperature light water to water which serves as a secondary coolant. The cooled light water is transmitted back through the coolant line 15 to the pressurized water reactor 12.

The steam generator 13 is connected by coolant lines 20 and 21 respectively to a turbine 18 and a condenser 19 both installed outside the containment structure 11. The coolant line 21 is provided with a feed water pump 22. The turbine 18 is connected to a generator 23, whereas the condenser 19 is connected to a feed line 24 and a discharge line 25 that serve to feed and discharge the coolant (seawater, for example), respectively. In the steam generator 13, the high-pressure high-temperature light water passes heat to generate steam, which is then transported to the turbine 18 through the coolant line 20. The steam drives the turbine 18 so as to cause power generation by the generator 23. The steam, after driving the turbine 18, is cooled in the condenser 19 and returned to the steam generator 13 through the coolant line 21.

As shown in FIGS. 2 and 3, the pressurized water reactor 12 includes a reactor vessel 31 which is formed from a reactor vessel main body 32 and a reactor vessel head 33 attached to an upper portion of the reactor vessel main body 32. The reactor vessel head 33 can be opened and closed with respect to the reactor vessel main body 32, so that components can be inserted inside the reactor vessel 31. The reactor vessel main body 32 is a cylindrical structure whose upper portion is open and whose lower portion is closed, and provided with a thermal shield 34 fixed to an internal surface thereof, an inlet nozzle 35 and an outlet nozzle 36 both formed in an upper portion thereof for supply and drainage of the primary coolant (light water).

A reactor core 39 is sectioned in the reactor vessel main body 32 by upper and lower core plates 37 and 38 and houses number of fuel assemblies 40 inside. The reactor core 39 is divided into three or four areas (e.g., area for new fuels, area for fuels after first-cycle irradiation, area for fuels after second-cycle irradiation, and area for fuels after third-cycle irradiation) in view of a replacement order of the fuels, and designed so as to maintain symmetries through 90 degrees. In the first embodiment, the reactor core 39 is designed so as to accommodate $17 \times 17$ fuel assemblies 40, and pitch $P_1$ of each fuel assembly is set to 215 mm. An upper support plate 42 is fixed to an upper portion of the upper core plate 37 by support columns 41, and many control rod cluster guide tubes 43 are supported between the upper support plate 42 and the upper core plate 37. The reactor vessel head 33 supports a control rod drive mechanism 45. Through the control rod cluster guide tube 43, a control rod cluster driveshaft 46 extends down to reach the fuel assembly 40, and a control rod cluster (control rod) 47 is attached to a lower portion of the control rod cluster driveshaft 46.

On the other hand, a lower support plate 48 is fixed to a lower portion of the lower core plate 38, and supports instrumentation guide thimbles 49.

The control rod drive mechanism 45 moves the control rod cluster 47 so that the control rod (not shown) is inserted into the fuel assembly 40, thereby controlling the nuclear fission inside the reactor core 39. Heat energy generated by the nuclear fission heats up the light water filled inside the reactor vessel 31 and the resulting high-temperature light water is discharged from the outlet nozzle 36 and transported to the steam generator 13 as described above. More specifically, uranium or plutonium employed as the fuels in the fuel assembly 40 undergoes fission to release neutrons. The light water working as the neutron moderator and the primary coolant decreases the kinetic energy of released fast neutrons to turn the fast neutrons into thermal neutrons, thereby promoting further nuclear fission and depriving of the generated heat to cool the fuels. The number of neutrons generated in the reactor core 39 is controlled by the insertion of the control rod cluster 47 into the fuel assembly 40. When an emergent shutdown of the pressurized water reactor is required, the control rod cluster 47 is inserted into the fuel assembly rapidly.

The fuel assembly 40 is formed from a bundle of plural fuel rods 51 joined together by a spacer grid 52 in a matrix shape, as shown in FIGS. 4 and 5. The top nozzle 53 and the bottom nozzle 54 are fixed respectively to the upper end portion and the lower end portion of the fuel assembly 40. For simplicity in FIG. 5, a portion of the spacer grid formed between the fuel rods 51 is not shown and only an outer periphery of the spacer grid is shown schematically. The fuel assembly 40 according to the first embodiment is a $17 \times 17$ fuel assembly including 264 fuel rods 51, 24 control rod guide tubes 55 through which the control rods 47 are inserted, and one instrumentation guide thimble 56 through which a detector (not shown) for instrumentation inside the reactor is inserted, and pitch $P_2$ of the fuel rod 51 is set to 12.6 mm.

A fuel pellet 61 in the fuel rod 51 is formed by preparing uranium dioxide ($UO_2$) enriched to 5% or less in $^{235}U$ which is a fissile material, and sintering the uranium dioxide into a pellet shape as shown in FIG. 6. A fuel cladding tube 62 is made from a zirconium metal alloy. In the manufacture of the fuel rod 51, a predetermined number of fuel pellets 61 is put into the fuel cladding tube 62; and then a spring 63 is attached to an upper portion of the tube 62 to hold the fuel pellets 61. Then, the tube is filled with helium; and end caps 64 and 65 are fixed to the upper end portion and the lower end portion of the fuel cladding tube 62. Thus, the fuel rod 51 is formed.

In the pressurized water reactor 12 as described above, a thermal output of the reactor core, an operation period, and a maximum burnup of the fuel assemblies are set so that the pressurized water reactor 12 can maintain a rated thermal output for a predetermined time period. Based on the set values, a required amount of fuel load is determined. Then, the number and the length of the fuel rods are determined in consideration of a power peaking factor so as to satisfy a maximum linear heat generating rate (MLHGR) which enables to keep fuel integrity. Then, the diameter of the fuel rod is determined based on the amount of fuel load and the number of the fuel rods. Thereafter, an appropriate fuel cladding tube is selected, and the inner diameter and the outer diameter of the fuel cladding tube are determined in consideration of the behavior of the fuel rods (e.g., growth by irradiation, deformation of pellet, temperature of pellet, deformation of fuel cladding tube, FP gas release, and corrosion of fuel cladding tube) so that the fuel integrity can be guaranteed even when a transient event occurs during the operation. On the other hand, the relation between the volume ratio of the light water to uranium (H/U ratio) and the fuel economy (neutron multiplication factor) shows an inverse U-shaped curve and the neutron multiplication factor attains a maximum value at a certain level of H/U ratio. The pitch of the fuel rods for the pressurized water reactor is determined so that the selected pitch falls within a left-side region of an optimal value, in other words, in a region where the higher H/U ratio leads to the higher neutron multiplication factor, so that the higher temperature of the moderator (light water) leads to the lower neutron multiplication factor. Such features are described in "Behavior of Fuel in Light Water Reactor", Nuclear Safety Research Association, Editing Committee of Behavior of Fuel in Light Water Reactor, 4th edition, July 2003, pp. 27. Thus, once the pitch of the fuel rod is determined, the balance of capture inside the reactor core is also determined, whereby an optimal selectable range of the diameter of the fuel rod is extremely limited.

Generally, it is considered that when the diameter of the fuel rod (fuel pellet) is increased under the condition of the fixed fuel rod pitch, the H/U ratio decreases, in other words, decrease in moderator volume suppresses neutron slowing down, thereby suppressing the reactivity. When the amount of generated heat is made constant over the life of the fuel assembly, however, the larger diameter of the fuel rods (fuel pellets), which means the increase in the amount of loaded uranium and resulting decrease in discharged burnup, tends to cause the increase in reactivity in some regions.

According to a method of designing the fuel assembly proposed by the applicants of the present invention, at the optimization of the fuel rod (fuel pellet) for the improved fuel economy (neutron multiplication factor), the neutron multiplication factor is evaluated in consideration of changes in burnup caused by the variation in fuel amount by the changes in the diameter of the fuel rod or the diameter of the fuel pellet which results in changes in the H/U ratio, assuming that the total heat generation from the fuel assembly is constant. Thus, when the fuel rod pitch is constant, the variation in the diameter of the fuel rod or the fuel pellet leads to the variation in the burnup on which the evaluation of the neutron multiplication factor should be made. Then, a curve representing the relation between the H/U ratio and the neutron multiplication factor shifts. For example, when the fuel rod or the fuel pellet with a larger diameter is employed, the neutron multiplication factor is increased due to the decrease in the burnup, when the total heat generation is the same. In other words, the neutron multiplication factor takes a higher value than the value in the curve of the H/U ratio versus the neutron multiplication factor prior to the changes in the diameters of the fuel rod and the fuel pellet. As a result, it becomes clear that in some regions the neutron multiplication factor is increased over a conventionally designed level when the fuel rod or the fuel pellet with a larger diameter is employed if the total heat generation from the fuel assembly is constant.

More specifically, the reactor core of the pressurized water reactor can be formed basically from a fuel of a single species (same level of enrichment), and the characteristics concerning the life of the reactor core can be estimated based on the reactivity characteristics of the employed fuel. A basic parameter for the estimation is "batch burnup" which represents "an average burnup of the all fuel assemblies at the end of the cycle of the reactor core composed of specific fuel", which can be defined as the burnup which can maintain the criticality under the condition of a remaining boron concentration and the power level expected at the end of the cycle. The batch burnup is somewhat affected when the assumed size of the reactor core (the number of the fuel assemblies) changes, since it affects the leakage of the neutrons. The batch burnup, however, is basically the "feature quantity of fuel" and not the characteristic of the individual reactor core. With the increase in the enrichment of the fuel assemblies forming the reactor core, the batch burnup increases. For example, when the 17 × 17 fuel assemblies of 4.8wt% are employed, the batch burnup is approximately 34 GWd/t. It can substantially safely be said that the life of the reactor core of the pressurized water reactor comes to the end when the average burnup of all fuel of the reactor core reaches the batch burnup. Therefore, the reactor core generally has a longer life when the fuel has a higher batch burnup. In other words, when the fuel has a higher batch burnup, the replacement of a smaller number of fuel assemblies is sufficient for maintaining the same life of the reactor core.

When the batch burnup as described above is represented by B (MWd/t), the number of reload batches (the number of "region"s, or "campaign"s, of the fuel assemblies in the reactor core) by n, and cycle burnup (life of the reactor core) which can be guaranteed by θ (MWd/t), a following relation holds:

$$B = (n+1) / 2 \cdot \theta.$$

The above expression can be transformed into

$$n = 2B / \theta - 1.$$

In the above expression, the enrichment of the fuel, the amount of the loaded uranium, and the power level of the reactor core are not directly represented. These variables are taken into consideration as a variation in the batch burnup B or the cycle burnup (reactor core life) θ. According to the above expression, it can be said that even if changes in fuel design causes the decrease in the batch burnup B, if the cycle burnup (reactor core life) θ can be lowered by an amount which exceeds the relative amount of decrease in the batch burnup, the number n of reload batches will be increased. The increase in the number n of reload batches is equivalent to the decrease in the number of reload fuel assemblies, and eventually allows for a more efficient fuel management and an improved economic efficiency under the same cycle length.

As shown in FIG. 7, the fuel pellets 61 having a diameter $D_p$ are put into the fuel cladding tube 62 with a predetermined gap G therebetween in the fuel rod 51. The fuel cladding tube 62 is designed so as to have a predetermined thickness T and an outer diameter $D_r$. FIG. 8 shows a graph representing the neutron multiplication factor (as a relative value) with respect to the burnup of the fuel assembly, and indicates degrees of changes in the neutron multiplication factor when the diameter $D_p$ of the fuel pellet 61 is varied from 8.19 mm to 11.00 mm. When the fuel assembly is designed according to the conventional manner as described above, the diameter $D_p$ of the fuel pellet 61 is 8.19 mm, and the batch burnup B of the 4.8wt% 17 × 17 fuel assembly is 34200 MWd/t. Hence, the neutron multiplication factor k∞ (relative value) for the fuel pellet 61 with the diameter $D_p$ of 8.19 mm and the fuel assemblies with the burnup B of 34200 MWd/t, is set to 1.0. Here, it is assumed that even when the diameter $D_p$ of the fuel pellet 61 is changed, the gap G with the fuel cladding tube 62 and the thickness T of the fuel cladding tube 62 do not change.

Thus, as shown in the graph of FIG. 8, the neutron multiplication factor k∞ (reactivity) lowers as the burnup (burnup of fuel assemblies) proceeds, whereas the neutron multiplication factor k∞ (reactivity) lowers when the diameter $D_p$ of the fuel pellet becomes larger and the amount of the moderator is decreased. The batch burnup is a level where a necessary reactivity (neutron multiplication factor) for maintaining the reactor core critical.

When the batch burnup to be employed for the evaluation of the neutron multiplication factor $k\infty$ is fixed to the level (B=34200 MWd/t) given for the pellet diameter of 8.19 mm even when the pellet diameter is made larger, the neutron multiplication factor is monotonously decreased along with the increase in the pellet diameter (as represented by white circles in FIG. 8). This means an extension of cycle length so as to maintain the same level of burnup regardless of the increase in the pellet diameter. On the other hand, if the cycle length is fixed, the cycle burnup decreases (as shown by white diamond-shape symbols in the graph of FIG. 8) due to the increase in the uranium amount by the increase in the diameter of the fuel pellet. In brief, when the diameter of the fuel pellet is increased and the diameter $D_p$ of the fuel pellet is changed from $D_0$ to $D_1$ over the entire length of the fuel rod, a following relation holds between the cycle burnup $\theta_0$ and $\theta_1$ which grant the same cycle length (number of days), whereby the cycle burnup is decreased by the increase in the diameter of the fuel pellet.

$$\theta_1 \; / \; \theta_0 \; = \; (D_0 \; / \; D_1)^2.$$

In summary, as described above, the amount of loaded fuel is determined based on the thermal output of the reactor core, the operation period, and the maximum burnup of the fuel assembly; the number and the length of the fuel rods is determined in consideration of the power peaking factor; the diameter of the fuel rod is determined based on the amount of loaded fuel and the number of the fuel rods; the inner diameter and the outer diameter of the fuel cladding tube are determined in consideration of the behavior of the fuel rod; and the diameter of the fuel pellet is set based on the inner and the outer diameters of the fuel cladding tube and the moderating ratio which is based on the ratio of the uranium to the light water. The diameter $D_0$ of the fuel pellet is set in the above described manner. The cycle burnup corresponding to the diameter $D_0$ of the pellet is $\theta_0$.
FIG. 9 shows a graph representing the neutron multiplication factor (relative value) with respect to the diameter of the fuel pellet. FIG. 9 shows the changes in the neutron multiplication factor $k\infty$ (as a relative value) along the decrease in the cycle burnup caused by the increase in the pellet diameter $D_p$, based on the level of the burnup corresponding to the pellet diameter $D_p$=$D_0$=8.19 and the neutron multiplication factor $k\infty$ (relative value) of 1.0 (i.e., a level of the batch burnup corresponding to the pellet diameter of $D_p$, in other words, a level of the burnup represented by a point where the rightward descending curve of FIG. 8 representing the values corresponding to the pellet diameter $D_p$=$D_0$ intersects with the line representing the neutron multiplication factor $k\infty$ (relative value) of 1.0). When the neutron multiplication factor $k\infty$ (relative value) is higher than 1.0, it means that the level of the burnup at which the neutron

multiplication factor $k\infty$ (relative value) reaches 1.0 during the enlargement of the pellet diameter $D_p$ (i.e., a level of the batch burnup corresponding to the each pellet diameter of $D_p$, in other words, a level of the burnup represented by a point where each of the rightward descending curves of FIG. 8 representing the values corresponding to the respective pellet diameters intersects with the line representing the neutron multiplication factor $k\infty$ (relative value) of 1.0) is higher than the burnup decreased at the rate of decrease in the cycle burnup. In other words, it means that the rate of decrease in the batch burnup is smaller than the rate of decrease in the cycle burnup.
Thus, it can be said that the increase in the neutron multiplication factor (relative value) is equivalent to the increase in a ratio of the batch burnup B to the cycle burnup $\theta$ (B/$\theta$) along with the increase in the diameter of the fuel pellet. Therefore, it can be seen that the rate of decrease in the cycle burnup with respect to the increase in the diameter of the fuel pellet can be represented by a curve which gradually becomes gentle as can be found from the above expression. On the other hand, FIG. 10 shows a graph representing the rate of decrease in the cycle burnup and the batch burnup with respect to the pellet diameter based on the graph of FIG. 8. It can be seen that the amount of variation in the batch burnup tends to gradually increase with respect to the increase in the diameter of the fuel pellet as shown in FIG. 10. This is because when the amount of increase in the diameter of the fuel pellet is increased, the decrease in the amount of moderator is accelerated, and tends to increase the influence on reactivity. From the comparison between FIG. 8 and FIG. 10, it can be seen that in a region where the increased diameter of the fuel pellet is not larger than a gain limitation diameter shown in FIG. 10, in other words, when the pellet diameter falls within a diameter-increase gain region, the rate of decrease in the cycle burnup is higher than the rate of decrease in the batch burnup, in other words, the neutron multiplication factor is 1.0 or more.
FIG. 11 shows a graph representing the neutron multiplication factor (relative value) with respect to the fuel pellet. In particular, FIG. 11 shows an enlargement of a part of the graph shown in FIG. 9 in order to show an optimal region of the diameter of the fuel pellet. As shown in the graph of FIG. 11, though both the batch burnup B and the cycle burnup $\theta$ decrease in a region $A_{17}$ where the diameter $D_p$ of the fuel pellet is larger than 8.19 mm and not more than 8.62 mm, the ratio (B/$\theta$) of the batch burnup B to the cycle burnup $\theta$ is increased. In other words, the relative value of the neutron multiplication factor exceeds 1.0. Thus, the number of reload fuels can be advantageously decreased by the increase in the diameter of the fuel pellet in the region $A_{17}$.
Thus, in the fuel assembly 40 including the fuel rods 51 arranged in a square matrix of 17 $\times$ 17 with the fuel assembly pitch $P_1$ of 215 mm and the fuel rod pitch $P_2$ of 12.6 mm, in the pressurized water reactor 12, the diameter of the fuel pellet 61 can be optimized by setting

the diameter $D_p$ of the fuel pellet 61 larger than 8.19 mm and not more than 8.62 mm. Therefore, the neutron multiplication factor can be improved over that of the conventional fuel assembly, whereby an improved reactivity can be obtained. Though the diameter $D_p$ of the fuel pellet 61 is set to $8.19 < D_p \leq 8.62$ mm, the optimal value is $D_p = 8.40$ mm.

For design consideration, in the $17 \times 17$ fuel assembly, the fuel assembly pitch $P_1$ is set to 215 mm and the fuel rod pitch $P_2$ is set to 12.6 mm. Here, a dimensional tolerance of approximately $\pm$ 1 mm and approximately $\pm$ 0.1 mm are required respectively for the fuel assembly pitch $P_1$ and the fuel rod pitch $P_2$. Further, the gap G between the fuel pellet 61 and the fuel cladding tube 62 of approximately 0.08 mm is required to be set, and the thickness of approximately 0.57 mm is required for the zirconium metal alloy fuel cladding tube 62. Still further, though in the foregoing, the lower limit of the diameter $D_p$ of the fuel pellet 61 is set to a value larger than 8.19 mm, the diameter $D_p$ is desirably set to 8.25 mm or larger in consideration of the dimensional tolerance.

Thus in the pressurized water reactor of the first embodiment, the fuel rod 51 includes the fuel pellets 61 formed from the sintered uranium oxide and filled into the zirconium alloy fuel cladding tube 62, and the fuel rods 51 are bundled together in a matrix form to be the fuel assembly 40. The diameter of the fuel pellet 61 is set so as to fall within the region $A_{17}$. The region $A_{17}$ (diameter-increase gain region) is a region where the amount of increase in reactivity caused by the decreased burnup exceeds the amount of decrease in reactivity caused by the insufficient moderation by the decreased light water (moderator) when the outer diameter of the fuel pellet 61 is increased so as to increase the amount of loaded uranium in the fuel assemblies 40, while the total heat generation by the fuel assembly 40 is constant.

When the outer diameter of the fuel pellet 61 is increased, the amount of light water serving as the moderator decreases. Then the moderation becomes slower to suppress the reactivity. At the same time, however, due to the increase in the amount of the loaded uranium, the burnup is lowered to enhance the reactivity. In the region $A_{17}$, the amount of increase in the reactivity caused by the increase in the amount of loaded fuel accompanying the increase in the outer diameter of the fuel pellet 61 becomes larger than the amount of decrease in reactivity caused by the insufficient moderation due to the decrease in the amount of moderator. When the outer diameter of the fuel pellet 61 is set so as to fall within the region $A_{17}$, the diameter of the fuel pellet 61 can be optimized, whereby the reactivity can be increased so as to lengthen the life of the reactor core.

In this case, the region $A_{17}$ where the reactivity increases is a region where the decreased amount of cycle burnup is larger than the relative decreased amount of the batch burnup induced by the increase in the outer diameter of the fuel pellet 61. In other words, the region $A_{17}$ where the amount of decrease in the batch burnup caused by the increase in the diameter of the fuel pellet 61 is lower than the amount of decrease in the cycle burnup, is a region where the number of fuel rods 51 to be replaced is smaller. Thus, the economic efficiency is also improved.

More specifically, in the fuel assembly 40 in which the fuel rods 51 are arranged in a $17 \times 17$ matrix form with the fuel assembly pitch $P_1$ of 215 mm and the fuel rod pitch $P_2$ of 12.6 mm in the pressurized water reactor 12, the diameter $D_p$ of the fuel pellet 61 is set larger than 8.19 mm and not more than 8.62 mm. Therefore, the diameter of the fuel pellet 61 can be optimized, whereby the neutron multiplication factor and the reactivity can be improved over the conventional fuel assembly.

Second Embodiment

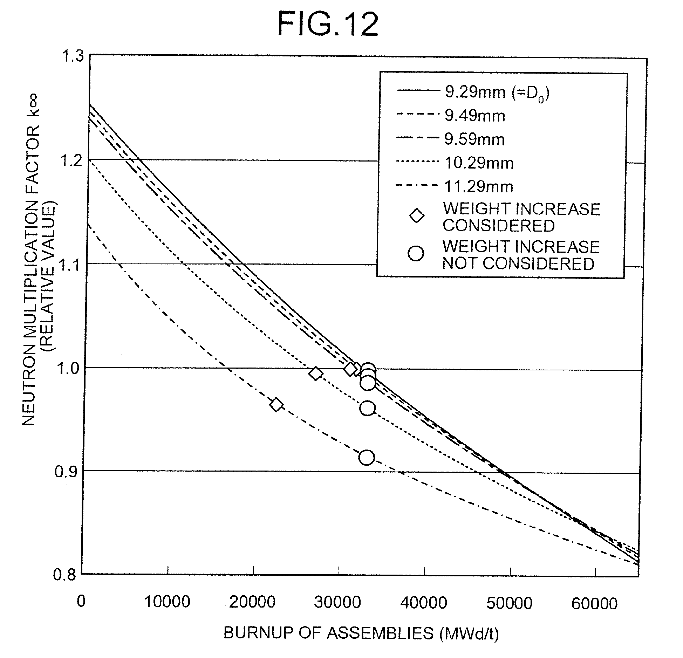

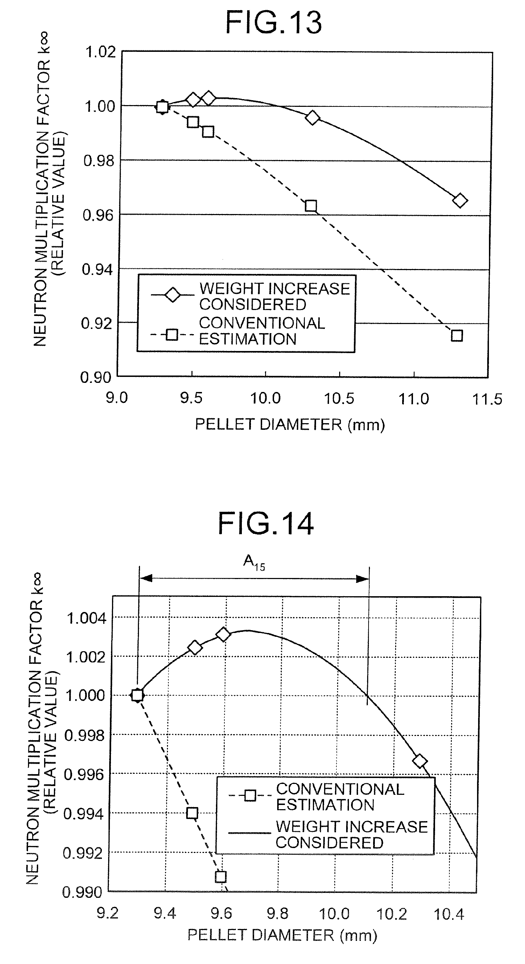

FIG. 12 shows a graph of a relation between the neutron multiplication factor and the burnup of $15 \times 15$ fuel assemblies in a pressurized water reactor according to a second embodiment of the present invention; FIG. 13 shows a graph of a relation between the diameter of the fuel pellet and the neutron multiplication factor; and FIG. 14 shows a graph representing an optimal range of the diameter of the fuel pellet. Here, the components having the same functions as those described in the first embodiment will be denoted by the same reference characters as in the first embodiment and the description thereof will not be repeated.

In the fuel assembly of the pressurized water reactor of the second embodiment, the fuel rods are arranged in a $15 \times 15$ matrix form with the fuel assembly pitch $P_1$ of 215 mm and the fuel rod pitch $P_2$ of 14.3 mm. In the second embodiment, similarly to the first embodiment, when the diameter of the fuel pellet is increased, the rate of decrease of the cycle burnup is higher than the rate of decrease in the batch burnup of the fuel assembly, in other words, the neutron multiplication factor is enhanced, in a certain region. The fuel assembly is designed so as to fall within this region.

FIG. 12 shows a graph representing the neutron multiplication factor (as a relative value) with respect to the burnup of the $15 \times 15$ fuel assembly, and indicates degrees of changes in the neutron multiplication factor when the diameter $D_p$ of the fuel pellet is varied from 9.29 mm to 11.29 mm. When the fuel assembly is designed according to the conventional manner as described above, the diameter $D_p$ of the fuel pellet is 9.29 mm, and the batch burnup B of the 4.8wt% $15 \times 15$ fuel assembly is 33100 MWd/t. Hence, the neutron multiplication factor $k\infty$ (relative value) for the fuel pellet with the diameter $D_p$ of 9.29 mm and the fuel assemblies with the burnup B of 33100 MWd/t, is set to 1.0. Here, it is assumed that even when the diameter $D_p$ of the fuel pellet is changed, the gap G with the fuel cladding tube and the thickness T of the fuel cladding tube do not change.

Thus, as shown in the graph of FIG. 12, the neutron multiplication factor $k\infty$ (reactivity) lowers as the burnup (burnup of fuel assembly) proceeds, whereas the neutron multiplication factor $k\infty$ (reactivity) lowers when the diameter $D_p$ of the fuel pellet becomes larger and the amount of the moderator is decreased. The batch burnup is a level where a necessary reactivity (neutron multiplication factor) for maintaining the reactor core critical is obtained. When the batch burnup to be employed for the evaluation of the neutron multiplication factor $k\infty$ is fixed to the level (B=33100 MWd/t) given for the pellet diameter of 9.29 mm even when the pellet diameter is made larger, the neutron multiplication factor is monotonously decreased along with the increase in the pellet diameter (as represented by white circles in FIG. 12). This means an extension of cycle length so as to maintain the same level of burnup regardless of the increase in the pellet diameter. On the other hand, if the cycle length is fixed, the cycle burnup decreases (as shown by white diamond-shape symbols in the graph of FIG. 12) due to the increase in the uranium amount by the increase in the diameter of the fuel pellet. In brief, when the diameter of the fuel pellet is increased and the diameter $D_p$ of the fuel pellet is changed from $D_0$ to $D_1$ over the entire length of the fuel rod, the cycle burnup is decreased by the increase in the diameter of the fuel pellet as described for the first embodiment.

FIG. 13 shows a graph representing the neutron multiplication factor (relative value) with respect to the diameter of the fuel pellet, and it can be said that the increase in the neutron multiplication factor (relative value) is equivalent to the increase in a ratio of the batch burnup B to the cycle burnup $\theta$ (B/$\theta$) along with the increase in the diameter of the fuel pellet. Therefore, it can be seen that the rate of decrease in the cycle burnup with respect to the increase in the diameter of the fuel pellet can be represented by a curve which gradually becomes gentle as is described for the first embodiment above. On the other hand, it can be seen that the amount of variation in the batch burnup tends to gradually increase with respect to the increase in the diameter of the fuel pellet similarly to the above-described first embodiment. This is because when the amount of increase in the diameter of the fuel pellet is increased, the decrease in the amount of moderator is accelerated, and tends to increase the influence on reactivity. From the comparison therebetween, it can be seen that in a region where the increased diameter of the fuel pellet is insignificant, the rate of decrease in the cycle burnup is higher than the rate of decrease in the batch burnup, in other words, the neutron multiplication factor is 1.0 or more.

FIG. 14 shows a graph representing the neutron multiplication factor (relative value) with respect to the diameter of the fuel pellet. In particular, FIG. 14 shows an enlargement of a part of the graph shown in FIG. 13 in order to show an optimal region of the diameter of the fuel pellet. As shown in the graph of FIG. 14, though both the batch burnup B and the cycle burnup $\theta$ decrease in a region $A_{15}$ where the diameter $D_p$ of the fuel pellet is larger than 9.29 mm and not more than 10.11 mm, the ratio (B/$\theta$) of the batch burnup B to the cycle burnup $\theta$ is increased. In other words, the relative value of the neutron multiplication factor exceeds 1.0. Thus, the number of reload fuels can be advantageously decreased by the increase in the diameter of the fuel pellet in the region $A_{15}$.

Thus, in the fuel assembly including the fuel rods arranged in a square matrix of 15 $\times$ 15 with the fuel assembly pitch $P_1$ of 215 mm and the fuel rod pitch $P_2$ of 14.3 mm, in the pressurized water reactor, the diameter of the fuel pellet can be optimized by setting the diameter $D_p$ of the fuel pellet larger than 9.29 mm and not more than 10.11 mm. Therefore, the neutron multiplication factor can be improved over that of the conventional fuel assembly, whereby an improved reactivity can be obtained. Though the diameter $D_p$ of the fuel pellet is set to 9.29 < $D_p$ ≤ 10.11 mm, the optimal value is $D_p$ = 9.69 mm.

For design consideration, in the 15 $\times$ 15 fuel assembly, the fuel assembly pitch $P_1$ is set to 215 mm and the fuel rod pitch $P_2$ is set to 14.3 mm. Here, a dimensional tolerance of approximately ± 1 mm and approximately ± 0.1 mm are required respectively for the fuel assembly pitch $P_1$ and the fuel rod pitch $P_2$. Further, the gap G between the fuel pellet and the fuel cladding tube of approximately 0.09 mm is required to be set, and the thickness of approximately 0.62 mm is required for the zirconium metal alloy fuel cladding tube. Still further, though in the foregoing, the lower limit of the diameter $D_p$ of the fuel pellet is set to a value larger than 9.29 mm, the diameter $D_p$ is desirably set to 9.35 mm or larger in consideration of the dimensional tolerance.

Thus in the pressurized water reactor of the second embodiment, in the fuel assembly for the pressurized water reactor, the fuel rods are arranged in a 15 $\times$ 15 matrix form with the fuel assembly pitch $P_1$ of 215 mm and the fuel rod pitch $P_2$ of 14.3 mm. The diameter of the fuel pellet is set so as to fall within the region $A_{15}$. The region $A_{15}$ (diameter-increase gain region) is set as a region where the amount of increase in reactivity caused by the decreased burnup exceeds the amount of decrease in reactivity caused by the insufficient moderation by the decreased light water (moderator) when the outer diameter of the fuel pellet is increased so as to increase the amount of loaded uranium in the fuel assembly, while the total heat generation by the fuel assembly is constant. Thus, the diameter $D_p$ of the fuel pellet is set larger than 9.29 mm and not more than 10.11 mm. Therefore, the diameter of the fuel pellet can be optimized and the neutron multiplication factor can be increased over the conventional fuel assembly, whereby the reactivity can be increased.

Third Embodiment

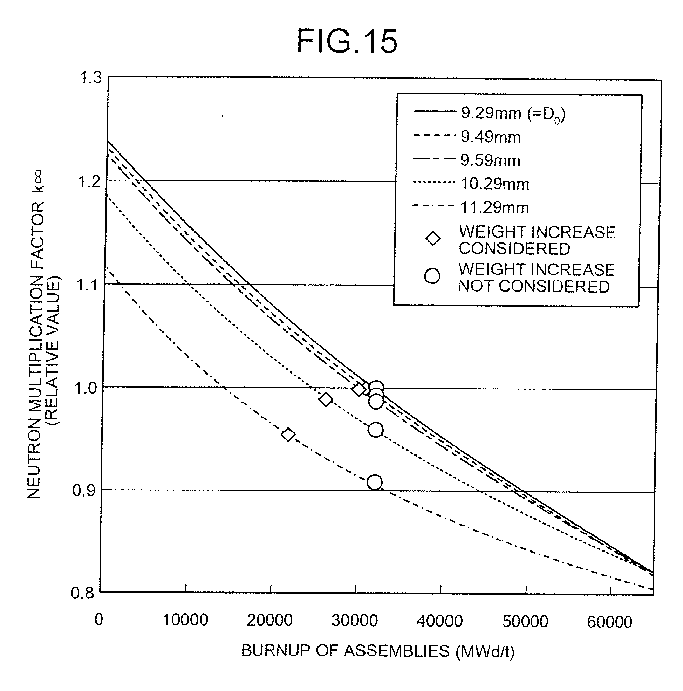

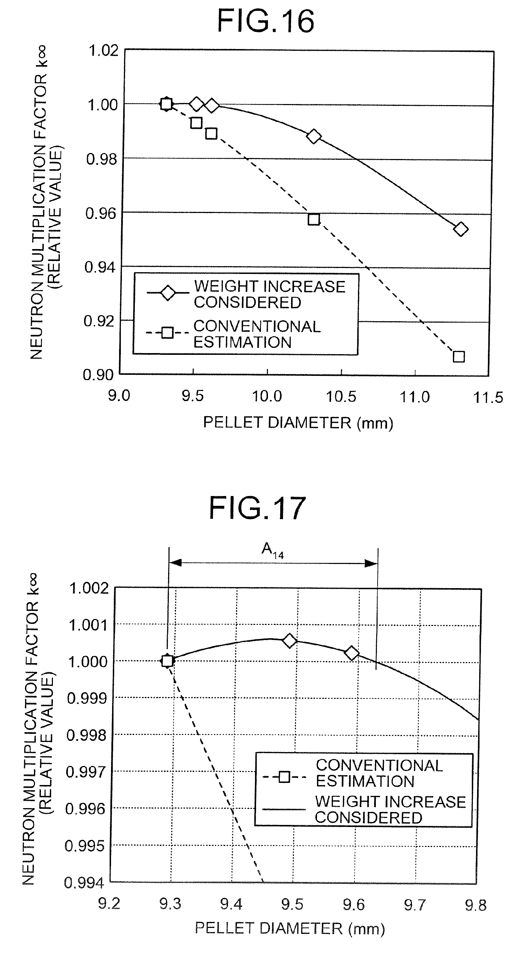

FIG. 15 shows a graph of a relation between the neutron multiplication factor and the burnup of a 14 × 14 fuel assembly in a pressurized water reactor according to a third embodiment of the present invention; FIG. 16 shows a graph of a relation between the neutron multiplication factor and the diameter of the fuel pellet; and FIG. 17 shows a graph representing an optimal range of the diameter of the fuel pellet. Here, the components having the same functions as those described in the other embodiments will be denoted by the same reference characters as in the other embodiments and the description thereof will not be repeated.

In the fuel assembly of the pressurized water reactor of the third embodiment, the fuel rods are arranged in a 14 × 14 matrix form with the fuel assembly pitch $P_1$ of 198 mm and the fuel rod pitch $P_2$ of 14.1 mm. In the third embodiment, similarly to the first embodiment, when the diameter of the fuel pellet is increased, the rate of decrease of the cycle burnup is higher than the rate of decrease in the batch burnup of the fuel assembly, in other words, the neutron multiplication factor is enhanced, in a certain region. The fuel assembly is designed so as to fall within this region.

FIG. 15 shows a graph representing the neutron multiplication factor (as a relative value) with respect to the burnup of the 14 × 14 fuel assembly, and indicates degrees of changes in the neutron multiplication factor when the diameter $D_p$ of the fuel pellet is varied from 9.29 mm to 11.29 mm. When the fuel assembly is designed according to the conventional manner as described above, the diameter $D_p$ of the fuel pellet is 9.29 mm, and the batch burnup B of the 4.8wt% 14 × 14 fuel assembly is 32000 MWd/t. Hence, the neutron multiplication factor k∞ (relative value) for the fuel pellet with the diameter $D_p$ of 9.29 mm and the fuel assemblies with the burnup B of 32000 MWd/t, is set to 1.0. Here, it is assumed that even when the diameter $D_p$ of the fuel pellet is changed, the gap G with the fuel cladding tube and the thickness T of the fuel cladding tube do not change.

Thus, as shown in the graph of FIG. 15, the neutron multiplication factor k∞ (reactivity) lowers as the burnup (burnup of fuel assemblies) proceeds, whereas the neutron multiplication factor k∞ (reactivity) lowers when the diameter $D_p$ of the fuel pellet becomes larger and the amount of the moderator is decreased. The batch burnup is a level where a necessary reactivity (neutron multiplication factor) for maintaining the reactor core critical is obtained. When the batch burnup to be employed for the evaluation of the neutron multiplication factor k∞ is fixed to the level (B=32000 MWd/t) given for the pellet diameter of 9.29 mm even when the pellet diameter is made larger, the neutron multiplication factor is monotonously decreased along with the increase in the pellet diameter (as represented by white circles in FIG. 15). This means an extension of cycle length so as to maintain the same level of burnup regardless of the increase in the pellet diameter. On the other hand, if the cycle length is fixed, the cycle burnup decreases (as shown by white diamond-shape symbols in the graph of FIG. 15) due to the increase in the uranium amount by the increase in the diameter of the fuel pellet. In brief, when the diameter of the fuel pellet is increased and the diameter $D_p$ of the fuel pellet is changed from $D_0$ to $D_1$ over the entire length of the fuel rod, the cycle burnup is decreased by the increase in the diameter of the fuel pellet similarly to the first embodiment described above.

FIG. 16 shows a graph representing the neutron multiplication factor (relative value) with respect to the diameter of the fuel pellet, and it can be said that the increase in the neutron multiplication factor (relative value) is equivalent to the increase in a ratio of the batch burnup B to the cycle burnup θ (B/θ) along with the increase in the diameter of the fuel pellet. Therefore, it can be seen that the rate of decrease in the cycle burnup with respect to the increase in the diameter of the fuel pellet can be represented by a curve which gradually becomes gentle similarly to the first embodiment described above. On the other hand, it can be seen that the amount of variation in the batch burnup tends to gradually increase with respect to the increase in the diameter of the fuel pellet similarly to the above-described first embodiment. This is because when the amount of increase in the diameter of the fuel pellet is increased, the decrease in the amount of moderator is accelerated, and tends to increase the influence on reactivity. From the comparison therebetween, it can be seen that in a region where the increased diameter of the fuel pellet is insignificant, the rate of decrease in the cycle burnup is higher than the rate of decrease in the batch burnup, in other words, the neutron multiplication factor is 1.0 or more.

FIG. 17 shows a graph representing the neutron multiplication factor (relative value) with respect to the diameter of the fuel pellet. In particular, FIG. 17 shows an enlargement of a part of the graph shown in FIG. 16 in order to show an optimal region of the diameter of the fuel pellet. As shown in the graph of FIG. 17, though both the batch burnup B and the cycle burnup θ decrease in a region $A_{14}$ where the diameter $D_p$ of the fuel pellet is larger than 9.29 mm and not more than 9.64 mm, the ratio (B/θ) of the batch burnup B to the cycle burnup θ is increased. In other words, the relative value of the neutron multiplication factor exceeds 1.0. Thus, the number of reload fuels can be advantageously decreased by the increase in the diameter of the fuel pellet in the region $A_{14}$.

Thus, in the fuel assembly including the fuel rods arranged in a square matrix of 14 × 14 with the fuel assembly pitch $P_1$ of 198 mm and the fuel rod pitch $P_2$ of 14.1 mm, in the pressurized water reactor, the diameter of the fuel pellet can be optimized by setting the diameter $D_p$ of the fuel pellet larger than 9.29 mm and not more than 9.64 mm. Therefore, the neutron multiplication factor can be improved over that of the conventional fuel assembly, whereby an improved reactivity can be obtained. Though the diameter $D_p$ of the fuel pellet is set to $9.29 < D_p \leq 9.64$ mm, the optimal value is $D_p = 9.47$ mm.

For design consideration, in the 14 × 14 fuel assembly, the fuel assembly pitch $P_1$ is set to 198 mm and the fuel rod pitch $P_2$ is set to 14.1 mm. Here, a di-

mensional tolerance of approximately $\pm$ 1 mm and approximately $\pm$ 0.1 mm are required respectively for the fuel assembly pitch $P_1$ and the fuel rod pitch $P_2$. Further, the gap G between the fuel pellet and the fuel cladding tube of approximately 0.09 mm is required to be set, and the thickness of approximately 0.62 mm is required for the zirconium metal alloy fuel cladding tube. Still further, though in the foregoing, the lower limit of the diameter $D_1$ of the fuel pellet is set to a value larger than 9.29 mm, the diameter $D_p$ is desirably set to 9.35 mm or larger in consideration of the dimensional tolerance.

Thus in the pressurized water reactor of the third embodiment, in the fuel assembly for the pressurized water reactor, the fuel rods are arranged in a 14 $\times$ 14 matrix form with the fuel assembly pitch $P_1$ of 198 mm and the fuel rod pitch $P_2$ of 14.1 mm. The diameter of the fuel pellet is set so as to fall within the region $A_{14}$. The region $A_{14}$ (diameter-increase gain region) is set as a region where the amount of increase in reactivity caused by the decreased burnup exceeds the amount of decrease in reactivity caused by the insufficient moderation by the decreased light water (moderator) when the outer diameter of the fuel pellet is increased so as to increase the amount of loaded uranium in the fuel assemblies, while the total heat generation by the fuel assembly is constant. Thus, the diameter $D_p$ of the fuel pellet is set larger than 9.29 mm and not more than 9.64 mm. Therefore, the diameter of the fuel pellet can be optimized and the neutron multiplication factor can be increased over the conventional fuel assembly, whereby the reactivity can be increased.

INDUSTRIAL APPLICABILITY

The fuel assembly of the pressurized water reactor and the method of designing the fuel assembly according to the present invention is intended to optimize the diameter of the fuel pellet by finding a region in which the reactivity can be enhanced by the increase in the outer diameter of the fuel pellet 61, and are applicable to the fuel assemblies of any types of the pressurized water reactor and method of designing the same.

**Claims**

1. A fuel assembly for a pressurized water reactor, the fuel assembly being formed from plural fuel rods bundled together in a matrix form, each fuel rod including fuel pellets made from sintered uranium oxide put into a zirconium metal alloy cladding tube, wherein an outer diameter of the fuel pellet is determined so as to fall within a diameter-increase gain region, the diameter-increase gain region being a region in which an amount of increase in reactivity caused by a decrease in burnup due to an increase in a weight of the uranium exceeds an amount of decrease in reactivity caused by an insufficient moderation due to a decrease in a moderator when the outer diameter of the fuel pellet is increased and whereby the weight of the uranium loaded in the fuel assembly is increased.

2. The fuel assembly for the pressurized water reactor according to claim 1, wherein the diameter-increase gain region where the reactivity exceeds is a region in which even if a batch burnup is decreased due to the increase in the outer diameter of the fuel pellet, an amount of decrease in a cycle burnup exceeds a relative amount of decrease in the batch burnup.

3. A fuel assembly for a pressurized water reactor, the fuel assembly being formed from plural fuel rods bundled together in a matrix form, each fuel rod including fuel pellets made from sintered uranium oxide put into a zirconium metal alloy cladding tube, wherein the plural fuel rods are arranged in a 17 $\times$ 17 square matrix with a fuel rod pitch of 12.6 mm and the outer diameter of the fuel pellet is set larger than 8.25 mm and equal to or smaller than 8.62 mm

4. A fuel assembly for a pressurized water reactor, the fuel assembly being formed from plural fuel rods bundled together in a matrix form, each fuel rod including fuel pellets made from sintered uranium oxide put into a zirconium metal alloy cladding tube, wherein the plural fuel rods are arranged in a 15 $\times$ 15 square matrix with a fuel rod pitch of 14.3 mm and the outer diameter of the fuel pellet is set larger than 9.35 mm and equal to or smaller than 10.11 mm.

5. A fuel assembly for a pressurized water reactor, the fuel assembly being formed from plural fuel rods bundled together in a matrix form, each fuel rod including fuel pellets made from sintered uranium oxide put into a zirconium metal alloy cladding tube, wherein the plural fuel rods are arranged in a 14 $\times$ 14 square matrix with a fuel rod pitch of 14.1 mm and the outer diameter of the fuel pellet is set larger than 9.35 mm and equal to or smaller than 9.64 mm.

6. A method of designing a fuel assembly for a pressurized water reactor, the fuel assembly being formed from plural fuel rods bundled together in a matrix form, each fuel rod including fuel pellets made from sintered uranium oxide put into a zirconium metal alloy cladding tube, wherein an outer diameter of the fuel pellet is determined so as to fall within a diameter-increase gain region, the diameter-increase gain region being a region in which an amount of increase in reactivity caused by a decrease in burnup due to an increase in a weight of the uranium exceeds an amount of decrease in reactivity caused by an insufficient moderation due to a decrease in a moderator when the outer diameter of the fuel pellet is increased and whereby the weight of the uranium loaded in the fuel assembly is increased.

7. The method of designing the fuel assembly according to claim 6, wherein the diameter-increase gain region where the reactivity exceeds is a region in which even if a batch burnup is decreased due to the increase in the outer diameter of the fuel pellet, an amount of decrease in a cycle burnup exceeds a relative amount of decrease in the batch burnup.

# FIG.1

CONTAINMENT
STRUCTURE
11

STEAM
GENERATOR
13

PRESSURIZER
16

PRESSURIZED
WATER
REACTOR
12

STEAM →

20

TURBINE
18

GENERATOR
23

← WATER

14

WATER

15    17

FUEL

WATER →

21

22

19 CONDENSER

25

24

TO DISCHARGE
CHANNEL

COOLANT
(SEAWATER)

EP 1 884 957 A1

# FIG.2

PRESSURIZED
WATER REACTOR
12

CONTROL ROD
45 DRIVE MECHANISM

33

42
UPPER
SUPPORT PLATE

41

INLET
NOZZLE 35

37
UPPER CORE PLATE

REACTOR 31
VESSEL

FUEL 40
ASSEMBLY

34

LOWER SUPPORT 48
PLATE

CONTROL ROD
43 CLUSTER GUIDE
TUBE

CONTROL ROD
46 CLUSTER
DRIVESHAFT

36 OUTLET NOZZLE

CONTROL ROD
47 CLUSTER

39 REACTOR CORE

32

LOWER CORE
38 PLATE

49 INSTRUMENTATION
GUIDE THIMBLE

# FIG.3

REACTORE CORE
39

FUEL
ASSEMBLY
40

180°

90°

270°

40

40

0°

$P_1$

$P_1$

# FIG.4

40 FUEL ASSEMBLY

53 TOP NOZZLE

52
SPACER GRID

51

51
FUEL ROD

51

54
BOTTOM NOZZLE

# FIG.5

FUEL ROD
51

51   55   51

52
SPACER
GRID

55

51

56
INSTRU-
MENTATION
GUIDE
THIMBLE

55
CONTROL
ROD
GUIDE
THIMBLE

P2

51   51   51   51

P2

EP 1 884 957 A1

# FIG.6

51 FUEL ROD

64

63 SPRING

61

62 FUEL CLADDING TUBE

61 FUEL PELLET

65

19

# FIG.7

51 FUEL ROD

61 FUEL PELLET

Dp

62 FUEL CLADDING TUBE

G    T

Dr

# FIG.8

# FIG.9

# FIG.10

# FIG.11

# FIG.12

## FIG.13

## FIG.14

# FIG.15

## FIG.16

## FIG.17

**INTERNATIONAL SEARCH REPORT**

| International application No. |
|---|
| PCT/JP2006/302876 |

A.   CLASSIFICATION OF SUBJECT MATTER
*G21C3/28*(2006.01), *G21C3/328*(2006.01)

According to International Patent Classification (IPC) or to both national classification and IPC

B.   FIELDS SEARCHED

Minimum documentation searched (classification system followed by classification symbols)
*G21C3/28*(2006.01), *G21C3/328*(2006.01)

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)
JSTPlus(JOIS), NUCLEN

C.   DOCUMENTS CONSIDERED TO BE RELEVANT

| Category* | Citation of document, with indication, where appropriate, of the relevant passages | Relevant to claim No. |
|---|---|---|
| A | JP 2-201190 A  (Siemens AG.),<br>09 August, 1990 (09.08.90),<br>Full text; Fig. 1<br>& US 5209898 A          & DE 88015433 U1<br>& EP 373418 A2 | 1-7 |
| A | JP 5-273369 A  (Nuclear Fuel Industrial Co., Ltd.),<br>22 October, 1993 (22.10.93),<br>Full text; Figs. 1 to 5<br>(Family: none) | 1-7 |

☐ Further documents are listed in the continuation of Box C.     ☐ See patent family annex.

| | |
|---|---|
| *     Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>22 March, 2006 (22.03.06) | Date of mailing of the international search report<br>04 April, 2006 (04.04.06) |
|---|---|
| Name and mailing address of the ISA/<br>Japanese Patent Office | Authorized officer |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11142560 A